# EUROPEAN PATENT APPLICATION

(11) **EP 3 009 296 A1**
(43) Date of publication of application: **20.04.2016**
(21) Application number: 13886983.9
(22) Date of filing: 13.06.2013
(51) Int. Cl.: B60L 11/18, B60M 7/00, H02J 7/00, H02J 50/00

(54) **VEHICLE ELECTRICITY SUPPLY SYSTEM**

(71) Applicant: IHI Corporation, Tokyo 135-8710 (JP)
(72) Inventor: UEDA Akio, Tokyo 135-8710 (JP)
(74) Representative: Maury, Richard Philip
(86) International application number: PCT/JP2013/066392
(87) International publication number: WO 2014/199499

(57) **Abstract**

A movable vehicle power-supplying system of the present invention includes power-supplying coils (L1 to L4) configured to wirelessly supply power to a movable vehicle (M) and provided in a place in which the movable vehicle (M) can stop, a positioning mark provided at a position at predetermined distances from the power-supplying coils (L1 to L4), a power-receiving coil provided in the movable vehicle (M) and configured to receive power from the power-supplying coils (L1 to L4), a distance identification means provided in the movable vehicle (M) and configured to identify distances between the power-supplying coils (L1 to L4) and the movable vehicle (M) by detecting the positioning mark, and a control unit configured to assist running of the movable vehicle (M) to the power-supplying coils (L1 to L4) based on the distances between the power-supplying coils (L1 to L4) and the movable vehicle (M) identified by the distance identification means.

## Description

### Technical Field

The present invention relates to a movable vehicle power-supplying system.

### Background Art

The following Patent Document 1 discloses a vehicle parking assist device for suppressing a relative positional deviation between a power-transmitting unit (power-supplying coil) fixed to a road surface and a power-receiving unit (power-receiving coil) installed in the bottom of a vehicle. That is, the vehicle parking assist device includes the power-receiving unit mounted on the vehicle and configured to wirelessly receive power from the power-transmitting unit, a camera configured to capture an image of an area near the vehicle, the first vehicle guiding unit configured to recognize a position of the power-transmitting unit in the image obtained from the camera and guide the vehicle to the power-transmitting unit, and the second vehicle guiding unit configured to guide the vehicle based on power received by the power-receiving unit.

In addition, the following Patent Document 2 discloses a wireless power-supplying system for suppressing the occurrence of loss in association with energy conversion in wireless supply of power. That is, the wireless power-supplying system includes power-transmitting coils laid along a runway of a vehicle, the vehicle having a power-receiving coil for receiving power supplied from the power-transmitting coils and configured to transmit position information of the vehicle and operation information (acceleration information) of an accelerator pedal, a beacon configured to output signal information of a traffic signal installed in a running direction of the vehicle, and a control device configured to control applying timing of electric current to the power-transmitting coils configured to transmit power to the power-receiving coil based on the position information and the acceleration information of the vehicle and the signal information from the beacon so that a Lorentz force is generated in the running direction in association with power reception by the power-receiving coil.

### Document of Related Art

### Patent Document

[Patent Document 1] Japanese Unexamined Patent Application, First Publication No. 2011-188679
[Patent Document 2] Japanese Unexamined Patent Application, First Publication No. 2010-268661

### Summary of Invention

### Technical Problem

When the vehicle parking assist device disclosed in Patent Document 1, for example, is applied to suppression of a positional deviation between the power-supplying coil longitudinally installed in a stopping area such as an intersection and the power-receiving coil of the vehicle, the power-supplying coil installed in the road surface is covered by a movable vehicle running forward and therefore the camera is unlikely to recognize the power-supplying coil. In particular, it is difficult to capture an image of the power-supplying coil when a distance with a forward movable vehicle is short. In addition, the wireless power-supplying system disclosed in Patent Document 2 has a problem in that the size and cost of the system increase because the power-supplying coils are laid along the road surface.

The present invention is conceived in view of the above-described circumstances, and an object of the present invention is to appropriately detect positions of power-supplying coils in various places in which a movable vehicle can stop without increasing size and cost of a system and to suppress a positional deviation between the power-supplying coil on the ground and a power-receiving coil of the vehicle. Solution to Problem

In order to achieve the above-described object, according to the first aspect of the present invention, there is provided a movable vehicle power-supplying system for wirelessly supplying power to a movable vehicle, the movable vehicle power-supplying system including: a power-supplying means provided in a place in which the movable vehicle can stop; a positioning mark provided at a position at predetermined distances from the power-supplying means; a power-receiving means provided in the movable vehicle and configured to receive power from the power-supplying means; a distance identification means provided in the movable vehicle and configured to identify a distance between the power-supplying means and the movable vehicle by detecting the positioning mark, and a running assist means configured to assist running of the movable vehicle to the power-supplying means based on the distance between the power-supplying means and the movable vehicle identified by the distance identification means.

According to the second aspect of the present invention, in the above-described first aspect, the distance identification means captures an image of surroundings of the movable vehicle using a camera and calculates the distance between the power-supplying means and the movable vehicle based on the image of the surroundings.

According to the third aspect of the present invention, in the above-described first or second aspect, the movable vehicle power-supplying system in which a plurality of power-supplying means are provided and one positioning mark is provided at a position at predetermined distances from the plurality of power-supplying means, the movable vehicle power-supplying system further includes: a power-supplying place notification means configured to notify the movable vehicle of, as a power-supplying place, the power-supplying means at which the movable vehicle does not stop, wherein the distance identification means calculates a distance to the power-supplying place based on the power-supplying place of the notification provided from the power-supplying place notification means and a detection result of the positioning mark.

According to the fourth aspect of the present invention, in any one of the above-described first to third aspects, the running assist means causes the display unit to display a driving assist image indicating a distance between the power-supplying means and the movable vehicle.

### Effects of the Invention

According to the present invention, it is possible to appropriately detect positions of power-supplying means in various places in which a movable vehicle can stop and to suppress a positional deviation between a power-supplying coil means and a power-receiving means of a movable vehicle without increasing the size and cost of a system because a distance between the power-supplying means and the movable vehicle is identified using a positioning mark.

### Brief Description of the Drawings

Fig. 1 is a diagram illustrating the entire configuration of a movable vehicle power-supplying system according to an embodiment of the present invention and is a schematic diagram illustrating a positional relationship of components on a road.
Fig. 2 is a schematic diagram illustrating a detailed configuration of main parts of the movable vehicle power-supplying system according to an embodiment of the present invention.
Fig. 3 is a flowchart illustrating an operation of the movable vehicle power-supplying system according to an embodiment of the present invention.

### Description of Embodiments

Here, an embodiment of the present invention will be described with reference to the drawings.

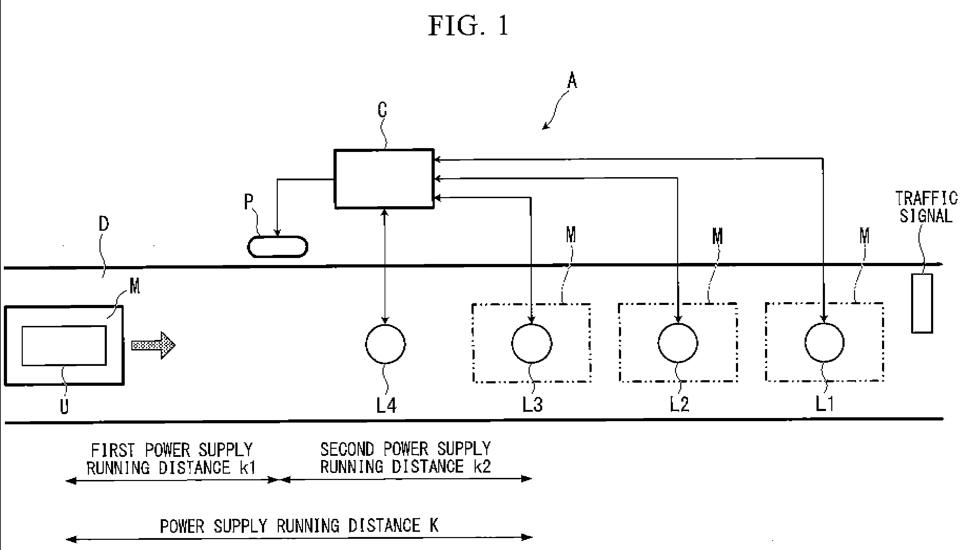

As illustrated in Fig. 1, a movable vehicle power-supplying system A according to this embodiment includes four power-supplying coils L1 to L4 fixedly provided on the ground, a positioning mark post P, a control device C, and a vehicle device U provided in a movable vehicle M.

This movable vehicle power-supplying system A wirelessly supplies power (electric power) to the movable vehicle M stopping behind a traffic signal on a road D via the power-supplying coils L1 to L4. The power-supplying coils L1 to L4 constitute a power-supplying means in this embodiment with the power-supplying circuit (not illustrated). In addition, the positioning mark post P and the control device C constitute a power-supplying place notification means in this embodiment.

The power-supplying coils L1 to L4 are helical coils having a predetermined coil diameter and are embedded at predetermined intervals behind the traffic signal in the running direction of the movable vehicle M on the road D as illustrated That is, among the four power-supplying coils L1 to L4, the power-supplying coil L1 is provided at a position closest to the traffic signal on the road D, the power-supplying coil L2 is provided at the next closest position to the traffic signal after the power-supplying coil L1 on the road D, the power-supplying coil L3 is provided at a next closest position to the traffic signal after the power-supplying coil L2 on the road D, and the power-supplying coil L4 is provided at a next closest position to the traffic signal after the power-supplying coil L3 on the road D (that is, a position farthest from the traffic signal on the road).

In addition, the power-supplying coils L1 to L4 radiate a magnetic field (power-supplying magnetic field) to an area around the power-supplying coils L1 to L4 by supplying alternating current (AC) power of a predetermined frequency from the power-supplying circuit. These power-supplying coils L1 to L4 are embedded in the road D in a posture in which a coil axis is in a vertical direction and in an exposed state on the road D or a molded state using a non-magnetic material such as a plastic or the like so that the power-supplying magnetic field is applied to the movable vehicle M. Also, the power-supplying circuit outputs the AC power in response to a power-supplying control signal input from the control device C.

As illustrated, the positioning mark post P is provided on a shoulder of the road D and an upstream side (a side far from the traffic signal) at a predetermined distance from the power-supplying coil L4 farthest from the traffic signal in the road D, and includes a positioning mark p1 and a beacon p2. That is, because distances between the power-supplying coils L1 to L4 on the road D have fixed values and a distance between the power-supplying coil L4 and the positioning mark post P also has a fixed value, the positioning mark post P is provided on the upstream side at predetermined distances from the power-supplying coils L1 to L4,

The positioning mark p1 is a mark for enabling the movable vehicle M to recognize the presence of the positioning mark post P and is a very specific graphic which is not found near the road D. The beacon p2 is a wireless communication device configured to transmit a stop assist signal to the movable vehicle M based on a control signal input from the control device C. The stop assist signal is a signal for notifying the movable vehicle M of, as a "power-supplying place," a power-supplying coil closest to the traffic signal at which the movable vehicle M does not stop among the power-supplying coils L1 to L4.

The control device C is a software type control device which functions based on a predetermined system control program and causes the power-supplying circuit to supply AC power when the movable vehicle M stops at any one of the power-supplying coils L1 to L4. In addition, this control device C causes the power-supplying circuit to end the supply of AC power when there is no movable vehicle M stopping at any one of the power-supplying coils L1 to L4.

An impedance (output impedance of the power-supplying circuit) when viewing the power-supplying coil L1 from the power-supplying circuit in the movable vehicle M stopping at any one (for example, the power-supplying coil L1) of the power-supplying coils L1 to L4 significantly changes from the impedance in the movable vehicle M not stopping It is because the power-receiving coil of the movable vehicle M to be described below is electromagnetically coupled to the power-supplying coil L1. For example, the control device C determines any one of the power-supplying coils L1 to L4 at which the movable vehicle M has stopped, causes the power-supplying circuit to start the supply of power by monitoring a change in the output impedance for the power-supplying coils L1 to L4, and notifies the movable vehicle M of the power-supplying place as a stop assist signal via the beacon p2.

The movable vehicle M is a vehicle that is driven by a driver and runs on the road D. For example, the movable vehicle M is an electric vehicle or a hybrid vehicle which runs using electric power as a power source. This movable vehicle M includes the vehicle device U constituting this movable vehicle power-supplying system A with a ground facility including the above-described power-supplying coils L1 to L4, a power-supplying circuit (not illustrated), the positioning mark post P, and the control device C.

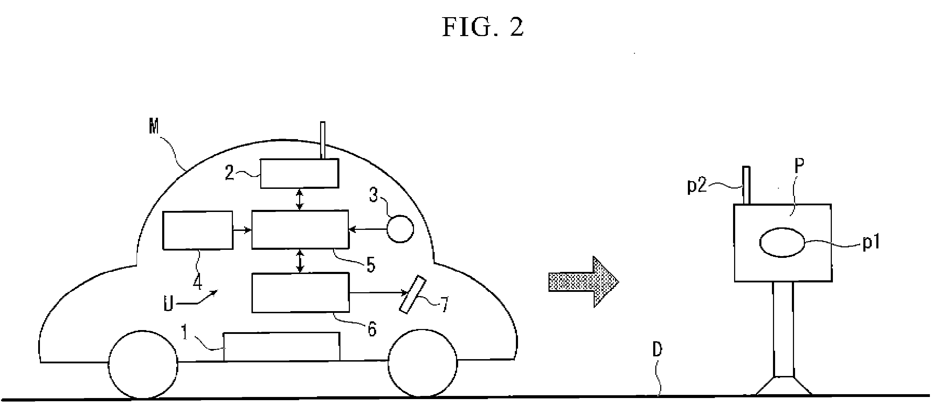

As illustrated in Fig. 2, the vehicle device U includes a power-receiving coil 1, a communication unit 2, a camera 3, a speed sensor 4, a distance calculating unit 5, a control unit 6, and a touch panel 7. Also, although not illustrated in Fig. 2, the movable vehicle M naturally includes components necessary for running such as an engine, a running motor, an operation handle, a brake, and a power storage battery (secondary battery). Among such components, the communication unit 2, the camera 3, the speed sensor 4, and the distance calculating unit 5 constitute a distance identification means in this embodiment and the control unit 6 and the touch panel 7 constitute a running assist means in this embodiment.

The power-receiving coil 1 is provided in the bottom of the movable vehicle M in a posture in which the coil axis is in the vertical direction so that the power-receiving coil 1 can face the power-supplying coils L1 to L4. This power-receiving coil 1 has approximately the same coil diameter as the power-supplying coils L1 to L4 which are ground facilities and wirelessly receives AC power so that the power-receiving coil 1 is electromagnetically coupled to any one of the power-supplying coils L1 to L4. This power-receiving coil 1 constitutes a power-receiving means in this embodiment with a charging circuit (not illustrated).

The AC power (received power) received by the power-receiving coil 1 is supplied from the power-receiving coil 1 to the driving motor via the charging circuit, the supplied AC power is converter into direct current (DC) power, and a power storage (not illustrated) is charged with the DC power.

Here, wireless power reception from the power-supplying coils L1 to L4 by the power-receiving coil 1 of the movable vehicle M is performed based on a magnetic field resonance scheme. That is, a resonance capacitor (not illustrated) for constituting the resonance circuit is connected to each of the power-receiving coil 1 and the power-supplying coils L1 to L4. Also, for example, the electrostatic capacitance of the resonance capacitor is set so that a resonance frequency of the power-receiving-side resonance circuit including the power-receiving coil 1 and the resonance capacitor is the same as a resonance frequency of the power-supplying-side resonance circuit including the power-supplying coils L1 to L4 and the resonance capacitor.

The communication unit 2 is a wireless communication device configured to receive the stop assist signal transmitted from the beacon p2, and outputs the stop assist signal to the distance calculating unit 5. The camera 3 captures an image of the surroundings of the movable vehicle M in a forward running direction and outputs the captured image to the distance calculating unit 5. This camera 3, for example, is installed near a windshield of the movable vehicle M so that an angle of view of image capturing, for example, is fixed to capture the image of the surroundings of a specific fixed area in the running direction of the movable vehicle M. The speed sensor 4 is a sensor configured to detect a running speed of the movable vehicle M and outputs the running speed of the movable vehicle M as a speed signal to the distance calculating unit 5.

The distance calculating unit 5 is a software type calculating device which functions based on a predetermined distance calculating program and calculates a distance (power supply running distance K) between the movable vehicle M and the power-supplying place based on the image of the surroundings input from the camera 3, a distance data table indicating a relationship between a position of the mark post P in the image of the surroundings and a distance between the movable vehicle M and the mark post P pre-stored as calculation parameters, distances between the power-supplying coils L1 to L4 and the positioning mark post P (positioning mark pl) pre-stored as calculation parameters, a stop assist signal input from the communication unit 2, and a running speed of the movable vehicle M input from the speed sensor 4. This distance calculating unit 5 outputs the power supply running distance K to the control unit 6.

The control unit 6 is a software type control device which functions based on a predetermined vehicle control program and instructs the distance calculating unit 5 to perform a process of acquiring the power supply running distance K based on an operation instruction signal input from the touch panel 7. In addition, this control unit 6 generates a driving assist image for assisting a driver so as to stop the movable vehicle M in the power-supplying place based on the power supply running distance K input from the distance calculating unit 5 and outputs an image signal (assist image signal) indicating the above-described driving assist image to the touch panel 7. This driving assist image, for example, numerically displays the power supply running distance K which gradually decreases in association with the running of the movable vehicle M.

Although the distance calculating unit 5 and the control unit 6 are shown as separate functional components in Fig. 2, the distance calculating unit 5 and the control unit 6 are the same in terms of hardware. That is, the distance calculating unit 5 and the control unit 6 are types of computers including hardware elements such as a central processing unit (CPU), a read only memory (ROM), and a random access memory (RAM). The CPU executes the distance calculating program or vehicle control program stored in the ROM, thereby implementing the above-described functions. A detailed process of this control unit 6 will be described in the following description of an operation.

The touch panel 7, for example, is a liquid crystal display having an operation panel attached in the vicinity of an operation handle. The touch panel 7 displays the driving assist image based on the assist image signal input from the control unit 6 and receives an operation instruction of the driver to output the received operation instruction as an operation instruction signal to the control unit 6.

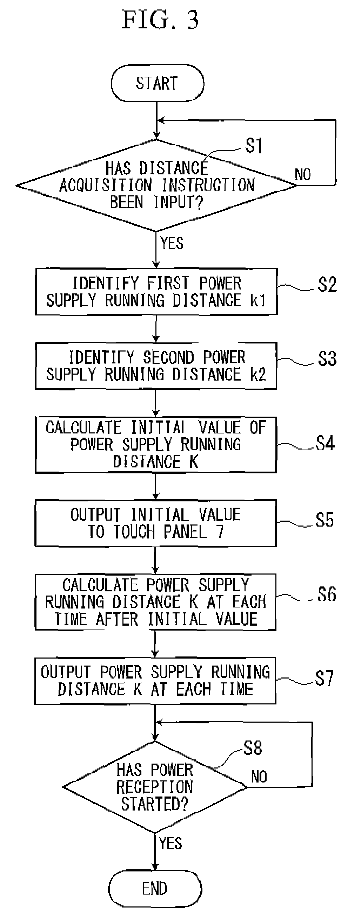

Next, the operation of this movable vehicle power-supplying system A configured as described above will be described according to the flowchart of Fig. 3.

First, the operation of the ground facility will be described. That is, the control device C constantly monitors a stopped/non-stopped state of the movable vehicle M in the power-supplying coils L1 to L4, detects, as a "power-supplying place," a power-supplying coil of a non-stopped state closest to the traffic signal among the power-supplying coils L1 to L4, that is, the leading available power-supplying coil in the running direction of the movable vehicle M, and outputs information of the power-supplying place as a stop assist signal to the beacon p2.

Here, when the traffic signal becomes "red," the leading movable vehicle M stops at a stop line near the traffic signal and a subsequent movable vehicle M sequentially stops after the front movable vehicle M. Accordingly, when the traffic signal becomes "red," the movable vehicle M sequentially stops at the power-supplying coil closer to the traffic signal. For example, when the two movable vehicles M run on the road D, the leading movable vehicle M stops at the power-supplying coil L1 and the movable vehicle M subsequent thereto stops at the power-supplying coil L2. In this case, the control device C detects the power-supplying coil L3 as a "power-supplying place" and outputs a detection result to the beacon p2.

The control device C iterates this detection of the power-supplying place and the output to the beacon p2 at a predetermined timing interval. The beacon p2 transmits a stop assist signal indicating the "power-supplying place" to an area around the beacon p2 at the predetermined timing interval. The movable vehicle M, which runs within a receivable range of the stop assist signal, can sequentially receive the stop assist signal to find the "power-supplying place."

For this ground facility, the vehicle device U mounted on the movable vehicle M operates as illustrated in Fig. 3. First, the control unit 6 determines whether an acquisition instruction (distance acquisition instruction) of the power supply running distance K has been input from the touch panel 7 (step S1). That is, the control unit 6 constantly monitors whether the acquisition instruction has been input during running of the movable vehicle M and instructs the distance calculating unit 5 to start the acquisition of the power supply running distance K when the acquisition instruction is input and the determination of step S1 becomes "Yes," whereas the control unit 6 is in a standby state in which the determination process of step S1 is iterated when no acquisition instruction is input. When it is determined that the remaining amount of charge of the storage battery is reduced and charging is necessary, the driver of the movable vehicle M inputs an instruction for acquiring the power supply running distance K to the touch panel 7.

When an instruction for starting the acquisition of the power supply running distance K is input from the control unit 6, the distance calculating unit 5 starts a process of calculating the power supply running distance K based on an image of the surroundings input from the camera 3, a distance data table (calculation parameters) indicating a relationship between a position of the mark post P within the image of the surroundings and a distance between the movable vehicle M and the mark post P, distances (calculation parameters) between the power-supplying coils L1 to L4 and the positioning mark post P, a stop assist signal input from the communication unit 2, and a running speed of the movable vehicle M input from the speed sensor 4.

Here, the image of the surroundings captured by the camera 3 having an capturing angle of view fixed for the movable vehicle M includes the mark post P when the movable vehicle M runs within a predetermined distance behind the mark post P. That is, in a state in which the movable vehicle M has not yet run within the predetermined distance, the mark post P does not appear within the image of the surroundings. However, the image of the surroundings includes the mark post P when the movable vehicle M is within a predetermined distance behind the mark post P and the position of the mark post P sequentially changes within the image of the surroundings when the running position of the movable vehicle M sequentially approaches the mark post P.

The distance calculating unit 5 extracts the mark post P by performing predetermined image processing on the image of the surroundings to identify a position of the mark post P within the image of the surroundings, and identifies a distance (first power supply running distance kl) between the movable vehicle M and the mark post P by retrieving the distance data table (calculation parameters) using the identified position of the mark post P (step S2).

The distance calculating unit 5 identifies the distance (second power supply running distance k2) between the stopping place and the positioning mark post P based on the stopping place on the basis of the stop assist signal and on the distances (calculation parameters) between the power-supplying coils L1 to L4 and the positioning mark post P (step S3). The distance calculating unit 5 calculates an initial value of the power supply running distance K to output the calculated initial value to the control unit 6 by calculating a sum of the first power supply running distance L1 and the second power supply running distance k2 acquired as described above (step S4). The control unit 6 generates a driving assist image indicating the initial value input from the distance calculating unit 5 to output the generated driving assist image as a assist image signal to the touch panel 7 (step S5).

The initial value of the power supply running distance K obtained as described above is a distance between the movable vehicle M and the power-supplying place at a certain instantaneous time related to the movable vehicle M of which a running position momentarily approaches the positioning mark post P. Because the movable vehicle M runs, the power supply running distance K sequentially decreases momentarily from the initial value according to a running speed of the movable vehicle M. The distance calculating unit 5 subtracts a distance (real running distance k3) obtained by sequentially multiplying the running speed of the movable vehicle M input from the speed sensor 4 by a predetermined time T from the initial value for every predetermined time T, thereby calculating the power supply running distance K at each time after the initial value is acquired and outputting the power supply running distance K to the control unit 6 (step S6).

Then, the control unit 6 sequentially generates the driving assist image indicating each power supply running distance K input from the distance calculating unit 5 to output the generated driving assist image as an assist image signal to the touch panel 7 (step S7). As a result, the power supply running distance K is sequentially displayed in time series in descending order subsequently to the initial value on the touch panel 7.

The driver of the movable vehicle M stops the movable vehicle M in the power-supplying place by driving and operating the movable vehicle M with reference to this driving assist image. As a result, the power-receiving coil 1 of the movable vehicle M faces the power-supplying place (for example, the power-supplying coil L3). When it is detected that the power-receiving coil 1 is electromagnetically coupled to the power-supplying coil L3, the control device C causes the power-supplying circuit (not illustrated) to start the output of AC power to the power-supplying coil L3, so that the supply of power to the movable vehicle M is started. The control unit 6 of the movable vehicle M determines whether the power-receiving coil l has received power from the power-supplying coil L3 (step S8) and ends the entire process when this determination becomes "Yes."

The supply of power from this ground facility to the movable vehicle M ends when the traffic signal becomes "green." That is, the control device C causes the power-supplying circuit (not illustrated) to end the supply to the power-supplying coil L3 when the traffic signal becomes "green," the movable vehicle M starts running, and the electromagnetic coupling of the power-receiving coil 1 to the power-supplying coil L3 is eliminated.

According to this embodiment, it is possible to appropriately detect positions of the power-supplying coils L1 to L4 in various places in which the movable vehicle M can stop and to suppress positional deviations between the power-supplying coils L1 to L4 and the power-receiving coil 1 of the movable vehicle M without increasing the size and cost of a system because the power supply running distance K is acquired using a positioning mark post P (positioning mark p1).

Although the embodiment of the present invention has been described, the present invention is not limited to the above-described embodiments and, for example, the following modifications are possible.
(1) Although the acquisition of the power supply running distance K starts based on an operation instruction of the driver in the above-described embodiment, the present invention is not limited thereto. For example, the control unit 6 may pre-store an installation position of the positioning mark post P on a map, find a current location of the movable vehicle M based on a Global Positioning System (GPS) signal or other information by radio in addition to information from the speed sensor 4, and automatically start the acquisition of the power supply running distance K when the movable vehicle M approaches the positioning mark post P.
(2) In addition, the acquisition of the power supply running distance K may automatically start when the camera 3 captures an image of the mark post P without starting the acquisition of the power supply running distance K based on an operation instruction of the driver.
(3) Although the mark post P is provided on the near side of the power-supplying coils L1 to L4 in the running direction in the above-described embodiment, the present invention is not limited thereto. For example, the mark post P may be provided at the same position as the power-supplying coil L4 located on the side nearest to the movable vehicle M.
(4) Although the movable vehicle M finds the power-supplying place by transmitting power-supplying place information from the beacon p2 to the movable vehicle M in the above-described embodiment, the present invention is not limited thereto. For example, a display unit configured to display an image indicating the power-supplying place may be provided on the positioning mark post P, the camera 3 may capture this image, and the movable vehicle M may find the power-supplying place from the captured image.
(5) Although the image of the surroundings including the mark post P is captured by the camera 3 to acquire the power supply running distance K in the above-described embodiment, the present invention is not limited thereto. For example, a laser sensor may be adopted in place of the camera 3 and the power supply running distance K may be acquired based on a detection result of the positioning mark post P by the laser sensor.
(6) Although one positioning mark post P is provided for the four power-supplying coils L1 to L4 in the above-described embodiment, the present invention is not limited thereto. For example, one positioning mark post P may be provided for one power-supplying coil L1.
(7) Although the power supply running distance K is displayed on the touch panel 7 in the above-described embodiment, the present invention is not limited thereto. In place of the power supply running distance K, for example, a driving time to the power-supplying place may be displayed. In addition, a necessary operation or the like may be displayed in addition to the power supply running distance K or the driving time. That is, assist information based on the power supply running distance K may be information for assisting the driving to the power-supplying place.
(8) Although the power supply running distance K is displayed on the touch panel 7 in the above-described embodiment, the present invention is not limited thereto. For example, a speaker may be provided in the movable vehicle M and the speaker may provide audio notification of the power supply running distance K.

### [Industrial Applicability]

Without increasing a size and cost of a system, positions of power-supplying coils in various places in which a movable vehicle can stop are detected and a positional deviation between the power-supplying coil on the ground and a power-receiving coil of the vehicle is suppressed.

### Description of Reference Signs

A Movable vehicle power-supplying system
P Positioning mark post
L1 to L4 Power-supplying coil
C Control device
M Movable vehicle
U Vehicle device
1 Power-receiving coil
2 Communication unit
3 Camera
4 Speed sensor
5 Distance calculating unit
6 Control unit
7 Touch panel
D Road

## Claims

1. A movable vehicle power-supplying system for wirelessly supplying power to a movable vehicle, the movable vehicle power-supplying system comprising:
a power-supplying means provided in a place in which the movable vehicle can stop;
a positioning mark provided at a position at a predetermined distance from the power-supplying means;
a power-receiving means provided in the movable vehicle and configured to receive power from the power-supplying means;
a distance identification means provided in the movable vehicle and configured to identify a distance between the power-supplying means and the movable vehicle by detecting the positioning mark; and
a running assist means configured to assist running of the movable vehicle to the power-supplying means based on the distance between the power-supplying means and the movable vehicle identified by the distance identification means.

2. The movable vehicle power-supplying system according to claim 1, wherein the distance identification means captures an image of surroundings of the movable vehicle using a camera and calculates the distance between the power-supplying means and the movable vehicle based on the image of the surroundings

3. The movable vehicle power-supplying system according to claim 1 or 2, in which a plurality of power-supplying means are provided and the positioning mark is provided at a position at predetermined distances from the plurality of power-supplying means, the movable vehicle power-supplying system further comprising:
a power-supplying place notification means configured to notify the movable vehicle of, as a power-supplying place, the power-supplying means at which the movable vehicle does not stop,
wherein the distance identification means calculates a distance to the power-supplying place based on the power-supplying place of the notification provided from the power-supplying place notification means and a detection result of the positioning mark.

4. The movable vehicle power-supplying system according to any one of claims 1 to 3, wherein the running assist means causes the display unit to display a driving assist image indicating a distance between the power-supplying means and the movable vehicle.
